# EUROPÄISCHE PATENTSCHRIFT

(11) **EP 1 251 146 B1**
(45) Veröffentlichungstag und Bekanntmachung des Hinweises auf die Patenterteilung: **13.09.2006**
(21) Anmeldenummer: 02008205.3
(22) Anmeldetag: 17.04.2002
(51) Int. Cl.: C08G 77/458, C08G 77/46, C08G 77/16, C08G 18/28, C08G 18/50, C08G 18/61, C08G 18/83

(54) **Siloxan-Elastomer**
Siloxane elastomer
Elastomère de Siloxane

(30) Priorität: 19.04.2001 DE 10119583
(43) Veröffentlichungstag der Anmeldung: 23.10.2002
(73) Patentinhaber: Getzner Werkstoffe Holding GmbH, 6706 Bürs/Bludenz (AT)
(72) Erfinder: Stolz, Andreas, Dr., 6710 Nenzing (AT); Dietrich, Martin, Dipl.-Ing., 6830 Rankweil (AT); Danner, Elisabeth, 6850 Dornbirn (AT); Stocker, Kathrin, 6791 St. Gallenkirch (AT)
(74) Vertreter: Gössmann, Christoph Tassilo

(56) Entgegenhaltungen:
- EP-A- 0 380 236
- WO-A-95/21206
- WO-A-99/03863
- US-A- 5 356 706

## Beschreibung

Die Erfindung betrifft Polyurethanelastomere, ein Verfahren zur Herstellung von Polyurethanelastomeren und Formkörpern.

In WO 95/21206 werden wasserlösliche oder in Wasser dispergierbare Polyurethanverbindungen und Zusammensetzungen beschrieben, die für Heftpflaster mit niedriger Haftkraft, die im aufgerollten Zustand nicht in der Rolle zusammenbacken, verwendet werden.

Bekannt ist, dass tieftemperaturbeständige Werkstoffe meistens aus Siliconkautschuk oder Polybutadienkautschuk gefertigt werden, wobei Kautschuke allgemein folgende Nachteile aufweisen:
Verflüchtigung des Weichmachers über die Zeit; Tieftemperaturbeständigkeit von Polybutadienkautschuk reicht nur bis ca. -105°C (Glasübergang).
Die Elastizität (Einsatztemperatur: DMA Messungen) bei tiefen Temperaturen geht weit vor dem eigentlichen Glasübergang (DSC Messungen) verloren überraschender Weise im Gegensatz zum neuen Polyurethanelastomer:

| Werkstoff | Glasübergang | konstante Elastizität |
|---|---|---|
| | | [E-Modul] |
| | (DSC) | (DMA) |
| Siliconkautschuk | -120°C | -60 bis -80°C |
| Polyurethanelastomer | -120°C | -120°C !!! |

Die Polyurethanelastomere, die sich auf dem Markt befinden, weisen eine Tieftemperaturbeständigkeit bis maximal -60°C (Glasübergang) auf, was ein Fehlen von Polyurethanelastomeren für sehr tiefe Temperaturen zur Folge hat.

Es ist Aufgabe der Erfindung die Nachteile des Standes der Technik zu überwinden und die Eigenschaften von Polyurethanelastomeren zu verbessern und die Eigenschaften aller bisher bekannten tieftemperaturbeständigen Werkstoffe zu verbessern.

Diese Aufgabe wird durch die Erfindung gelöst.

Ein Gegenstand der Erfindung ist ein Polyurethanelastomer, das auf der Basis von zumindest einer Isocyanatkomponente, zumindest einem Polysiloxan als Polyolkomponente, zumindest einem Katalysator und zumindest einem Kettenverlängerer herstellbar ist.

Alle im folgenden genannten Kombinationen von Verbindungen oder Komponenten können in beliebigen Verhältnissen verwendet werden.

Als sogenannte Isocyanatkomponenten können vorzugsweise alle bifunktionellen aromatischen und/oder aliphatischen Isocyanate folgender allgemeiner Strukturformel verwendet werden. Und zwar vorzugsweise als Monomer einzeln oder in Kombination mit anderen Monomeren, als präpolymeres Isocyanat einzeln oder in Kombination mit anderen Präpolymeren oder Monomeren.

Als Monomere werden vorzugsweise OCN - R - NCO verwendet und als Präpolymere werden vorzugsweise OCN - R¹- NCO verwendet.
wobei R vorzugsweise (CH₂)ₙ₁, 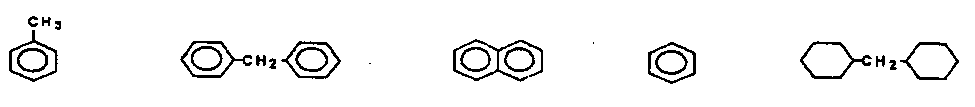 und
R¹ vorzugsweise
R-(NH)-(C=O)-0-[(CH-R²)-CH₂-O-]-(C=O)-(NH)-R oder
R-NH-(C=O)-O-[(C=O)-R³-(C=O)-O-R⁴-O-]-(C=O)-NH-R bedeutet
wobei R vorzugsweise (CH₂)ₙ₁, 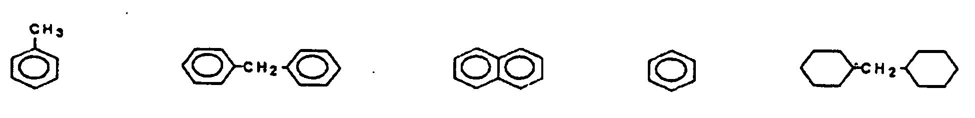 R² vorzugsweise H, CH₃ oder aliphatischer Kohlenwasserstoffrest mit 2 bis 4 Kohlenstoffatomen, wie vorzugsweise Ethyl-, n-Propyl-, iso-Propyl-, 1-n-Butyl-, 2-n-Butyl-, iso-Butyl-, tert.-Butyl- bedeutet.
R³ vorzugsweise (CH₂)ₙ₁, Phenyl,
und R⁴ vorzugsweise (CH₂)ₙ₂ bedeutet und
n1 eine ganze Zahl von 1 bis 10 , bevorzugt von 2 bis 8, besonders bevorzugt von 2 bis 6 ist.
n2 eine ganze Zahl von 1 bis 10 , bevorzugt von 1 bis 6, besonders bevorzugt von 2 bis 5 ist.

Bevorzugt werden alle Diisocyanatodiphenylmethan (MDI)-Varianten der allgemeinen Strukturformelen in beliebigen Kombinationen wie folgt verwendet.

MDI - Varianten sind: OCN -R⁵- NCO
wobei R⁵ vorzugsweise: 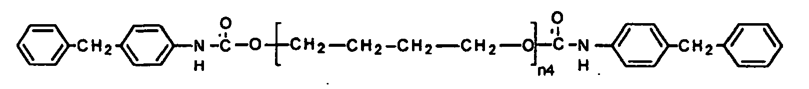 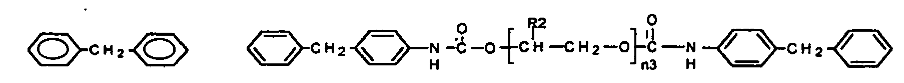 R² vorzugsweise H, CH₃ oder aliphatischer Kohlenwasserstoffrest mit 2 bis 4 Kohlenstoffatomen, wie vorzugsweise Ethyl-, n-Propyl-, iso-Propyl-, 1-n-Butyl-, 2-n-Butyl-, iso-Butyl-, tert.-Butyl- bedeutet und
n3 eine ganze Zahl von 1 bis 500 , bevorzugt von 10 bis 300, besonders bevorzugt von 10 bis 200 ist.
n4 eine ganze Zahl von 1 bis 10 , bevorzugt von 1 bis 5, besonders bevorzugt von 1 bis 3 ist.

Besonders bevorzugt werden Quasipräpolymere MDI-Variationen für die Herstellung der hochdämpfenden Polyurethanelastomere nach der allgemeinen Strukturformel in beliebigen Kombinationen verwendet:
Quasipräpolymere wie vorzugsweise MDI: OCN - R⁶ -NCO, OCN-R⁶-NCO und 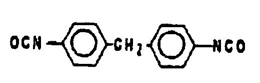 wobei R⁶ 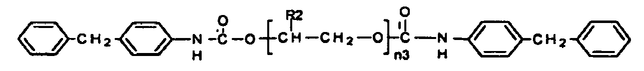 bedeutet,
wobei R² vorzugsweise H, CH₃ oder aliphatischer Kohlenwasserstoffrest mit 2 bis 4 Kohlenstoffatomen, wie vorzugsweise Ethyl-, n-Propyl-, iso-Propyl-, 1-n-Butyl-, 2-n-Butyl-, iso-Butyl-, tert.-Butyl- bedeutet, und
n3 eine ganze Zahl von 1 bis 500 , bevorzugt von 10 bis 300, besonders bevorzugt von 100 bis 200 ist.

Die Isocaynatkomponente wird vorzugsweise in einer Menge von 5 Gew.% bis 50 Gew.%, bevorzugt von 10 Gew.% bis 40 Gew.%, besonders bevorzugt von 20 Gew.% bis 35 Gew.% bezogen auf das Gesamtgewicht der Zusammensetzung eingesetzt.

Als Polyolkomponenten kommen vorzugsweise alle bi- und trifunktionellen Polyether- und/oder Polyesterpolyole in Kombination mit Polysiloxanen, Polysiloxane als alleinige Polyolkomponente, sowie Kombinationen solcher Komponenten zur Anwendung. Diese Polyolkomponenten werden durch die nachfolgend beschriebene allgemeine Strukturformel charakterisiert.

Vorzugsweise handelt es sich bei den Polyetherpolyolen um:

HO-R⁷-H

wobei R⁷ vorzugsweise (CH₂CHR²O)ₙ₅ und
R² vorzugsweise H, CH₃ oder aliphatischer Kohlenwasserstoffrest mit 2 bis 4 Kohlenstoffatomen, wie vorzugsweise Ethyl-, n-Propyl-, iso-Propyl-, 1-n-Butyl-, 2-n-Butyl-, iso-Butyl-, tert.-Butyl- bedeutet.
n5 eine ganze Zahl von 1 bis 5000 , bevorzugt von 1 bis 500, besonders bevorzugt von 50 bis 200 ist.

Besonders bevorzugt sind weiter
PTMEG-Polyole

H-(O-CH₂-CH₂-CH₂-CH₂-)_{q}-OH,

wobei q 3 - 45, bevorzugt 3 - 30, besonders bevorzugt 12-30 bedeutet.

Vorzugsweise handelt es sich bei den Polyesterpolyolen um: 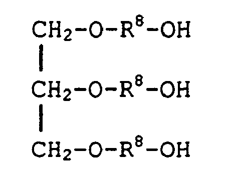 wobei R⁸ vorzugsweise [(C=O)-R³-(C=O)-O-R⁴-O]ₙ₆
und R³ vorzugsweise (CH₂)ₙ₇, Phenyl und
R⁴ vorzugsweise (CH₂)ₙ₂ bedeutet.
n2 eine ganze Zahl von 1 bis 10, bevorzugt von 1 bis 6, besonders bevorzugt von 2 bis 5 ist.
n6 eine ganze Zahl von 1 bis 200, bevorzugt von 1 bis 100, besonders bevorzugt von 20 bis 60 ist.
n7 eine ganze Zahl von 1 bis 15, bevorzugt von 1 bis 10, besonders bevorzugt von 2 bis 6 ist.

Vorzugsweise handelt es sich bei den Polysiloxanen um: 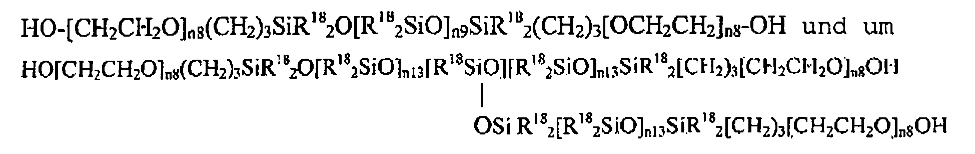 oder Mischungen solcher Komponenten,

R¹⁸ gleiche oder verschiedene Kohlenwasserstoffreste mit 1 bis 18 Kohlenstoffatom(en), bevorzugt 1 bis 6 Kohlenstoffatom(en), besonders bevorzugt 1-4 Kohlenstoffatom(en), die gegebenenfalls mit Halogenatomen, Aminogruppen, Ethergruppen, Estergruppen, Epoxygruppen, Mercaptogruppen, Cyanogruppen oder (Poly)glykolresten substituiert sind, wobei letztere aus Oxyethylen- und/oder Oxypropyleneinheiten aufgebaut sind, bedeutet.
Beispiele für Kohlenwasserstoffreste R¹⁸ sind Alkylreste, wie der Methyl-, Ethyl-, n-Propyl-, iso-Propyl-, 1-n-Butyl-, 2-n-Butyl-, iso-Butyl-, tert.-Butyl-, n-Pentyl-, iso-Pentyl-, neoPentyl-, tert.-Pentylrest; Hexylreste, wie der n-Hexylrest; Heptylreste, wie der n-Heptylrest; Octylreste, wie der n-Octylrest und iso-Octylreste, wie der 2,2,4-Trimethylpentylrest; Nonylreste, wie der n-Nonylrest; Decylreste, wie der n-Decylrest; Dodecylreste, wie der n-Dodecylrest; Octadecylreste, wie der n-Octadecylrest; Alkenylreste, wie der Vinyl- und der Allylrest; Cycloalkylreste, wie Cyclopentyl-, Cyclohexyl-, Cycloheptylreste und Methylcyclohexylreste; Arylreste, wie der Phenyl-, Naphthyl-, Anthryl- und Phenanthrylrest ; Alkarylreste, wie o-, m-, p-Tolylreste, Xylylreste und Ethylphenylreste; Aralkylreste, wie der Benzylrest, der α- und der β-Phenylethylrest.

Beispiele für substituierte Kohlenwasserstoffreste R¹⁸ sind halogenierte Reste wie der 3-Chlorpropylrest, der 3,3,3 Trifluorpropylrest, Chlorphenylreste, Hexafluorpropylreste, wie der 1-Trifluormethyl-2,2,2-trifluorethylrest; der 2(Perfluorhexyl)ethylrest, der 1,1,2,2-Tetrafluorethyloxypropylrest, der 1-Trifluormethyl-2,2,2-trifluorethyloxypropylrest, der Perfluorisopropyloxyethylrest, der Perfluorisopropyloxypropylrest; durch Aminogruppen substituierte Reste, wie der N-(2-Aminoethyl)-3-aminopropylrest, der 3-Aminopropylrest und der 3(Cyclohexylamino)propylrest; etherfunktionelle Reste, wie der 3-Methoxypropylrest und der 3-Ethoxypropylrest; cyanofunktionelle Reste, wie der 2-Cyanoethylrest; esterfunktionelle Reste, wie der Methacryloxypropylrest; epoxyfunktionelle Reste, wie der Glycidoxypropylrest und schwefelfunktionelle Reste, wie der 3-Mercaptopropylrest.

Bevorzugt als Reste R¹⁸ sind Kohlenwasserstoffreste mit 1 bis 10 Kohlenstoffatom(en), wobei besonders bevorzugt mindestens 80 %, insbesondere mindestens 90 %, der Reste R¹⁸ Methylreste sind.
wobei n8 eine ganze Zahl von 0 bis 30, bevorzugt von 0 bis 20, besonders bevorzugt von 0 bis 10 ist,
n9 eine ganze Zahl von 0 bis 100, bevorzugt von 1 bis 80, besonders bevorzugt von 10 bis 70 ist,
n13 eine ganze Zahl von 0 bis 40, bevorzugt von 5 bis 30, besonders bevorzugt von 5 bis 20 ist.
Oder um :

NH₂-[CH₂CH₂NH]ₙ₁₀(CH₂)₃SiR¹⁸₂O[R¹⁸₂SiO]ₙ₉SiR¹⁸₂(CH₂)₃[NHCH₂CH₂]ₙ₁₀-NH₂

und um 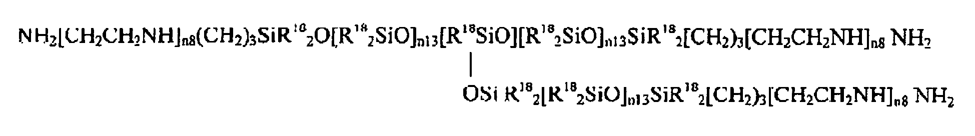 oder um Mischungen dieser Komponenten oder um Mischungen dieser Komponenten mit oben erwähnten Komponenten handelt,
wobei R¹⁸ die obige Bedeutung hat,
n8 eine ganze Zahl von 0 bis 30, bevorzugt von 0 bis 20, besonders bevorzugt von 0 bis 10 ist,
wobei n9 eine ganze Zahl von 0 bis 100, bevorzugt von 1 bis 80, besonders bevorzugt von 10 bis 70 ist,
n10 eine ganze Zahl von 0 bis 20, bevorzugt von 0 bis 10, besonders bevorzugt von 0 bis 5 ist,
n13 eine ganze Zahl von 0 bis 40, bevorzugt von 5 bis 30, besonders bevorzugt von 5 bis 20 ist.

Bevorzugt sind die Polysiloxane der allgemeinen Strukturformel:

HO-[CH₂CH₂O]ₙ₈(CH₂)₃SiR¹⁸₂O[R¹⁸₂SiO]ₙ₉SiR¹⁸₂(CH₂)₃[OCH₂CH₂]ₙ₈-OH

R¹⁸ die obige Bedeutung hat,
wobei n8 eine ganze Zahl von 0 bis 30, bevorzugt von 0 bis 20, besonders bevorzugt von 0 bis 10 ist.
n9 eine ganze Zahl von 0 bis 100, bevorzugt von 1 bis 80, besonders bevorzugt von 10 bis 70 ist.

Oder der allgemeinen Strukturformel :

NH₂-[CH₂CH₂NH]ₙ₁₀(CH₂)₃SiR¹⁸₂O[R¹⁸₂SiO]ₙ₉SiR¹⁸₂(CH₂)₃[NHCH₂CH₂]ₙ₁₀-NH₂

R¹⁸ die obige Bedeutung hat,
wobei n10 eine ganze Zahl von 0 bis 20, bevorzugt von 0 bis 10, besonders bevorzugt von 0 bis 5 ist.
n9 eine ganze Zahl von 0 bis 100, bevorzugt von 1 bis 80, besonders bevorzugt von 10 bis 70 ist.
Besonders bevorzugt kommen die carbinolfunktionellen Polysiloxane zum Einsatz mit der allgemeinen Formel:

HO-[CH₂CH₂O]ₙ₈(CH₂)₃SiR¹⁸₂O[R¹⁸₂SiO]ₙ₉SiR¹⁸₂(CH₂)₃[OCH₂CH₂]ₙ₈-OH

R¹⁸ die obige Bedeutung hat,
wobei n8 eine ganze Zahl von 0 bis 30, bevorzugt von 0 bis 20, besonders bevorzugt von 0 bis 10 ist.
n9 eine ganze Zahl von 0 bis 100, bevorzugt von 1 bis 80, besonders bevorzugt von 10 bis 70 ist.

Die Polyolkomponente wird vorzugsweise in einer Menge von 10 Gew.% bis 80 Gew.%, bevorzugt von 20 Gew.% bis 80 Gew.%, besonders bevorzugt von 40 Gew.% bis 70 Gew.% bezogen auf das Gesamtgewicht der Zusammensetzung eingesetzt.

Weiter werden sogenannte Kettenverlängerer für die Herstellung eines dieser Polyurethanelastomere eingesetzt. Es handelt sich bei diesen Kettenverlängerern um Triole und/oder Diole. Die Diole können mit sich selbst oder mit Triolen kombiniert werden, die in nachfolgenden allgemeinen Strukturformeln dargestellt werden.

Als Kettenverlängerer wird vorzugsweise:
HO-R¹⁰-OH, HO-R¹¹-OH verwendet, wobei R¹⁰ vorzugsweise (CH₂)ₙ₁₄, -(CH₂-CH₃)-(CH₂)ₙ₁₄-,-CH₂-(CH₂-CH₃)ₙ₁₄-,
R¹¹ vorzugsweise -CH₂-CH(OH)-CH₂-, -CH₂-CH(OH)-(CH₂)ₙ₁₄- bedeutet.
n14 eine ganze Zahl von 1 bis 10 , bevorzugt von 1 bis 7, besonders bevorzugt von 2 bis 6 ist.

Es sind auch Kombinationen der oben genannten Diole mit Diolen und/oder Triolen mit Heteroatomen im Gerüst möglich (siehe nachfolgende Strukturformeln).

Als Kettenverlängerer mit Heteroatomen wird vorzugsweise:
HO-R¹²-OH, HO-R¹³-OH verwendet,
wobei R¹² vorzugsweise (CH₂)ₙ₁₁-O-(CH₂)ₙ₁₁, -(CH₂)ₙ₁₁-NH-(CH₂)ₙ₁₁ (CH₂)ₙ₁₁-O-(CH₂)ₙ₁₁-O-(CH₂)ₙ₁₁, -(CH₂)ₙ₁₁-NH- (CH₂)ₙ₁₁-NH-(CH₂)ₙ₁₁
und R¹³ vorzugsweise [CH₂-CH(OH)-O-(CH₂)ₙ₁₁], [CH₂-CH(OH)-NH-(CH₂)ₙ₁₁] bedeutet.
n11 eine ganze Zahl von 1 bis 10, bevorzugt von 1 bis 7, besonders bevorzugt von 2 bis 4 ist.

Kombinationen von Diolen mit Di- und/oder Triaminen nach folgenden Strukturformeln sind ebenfalls möglich.

Bei den Di-/Triaminen handelt es sich vorzugsweise um:

H_{2N}-R¹⁴-NH₂, H₂N-R¹⁵-NH₂,

wobei R¹⁴ vorzugsweise -(CH₂)ₙ₁₂-CH₂-,
R¹⁵ vorzugsweise -(CH₂)-CH(NH₂)-CH₂- bedeutet
und
n12 eine ganze Zahl von 1 bis 10 , bevorzugt von 1 bis 7, besonders bevorzugt von 2 bis 5 ist.

Bevorzugt kommen Propandiol, Butandiol, Pentandiol, Hexandiol, Diethylenglykol, Glycerin oder Glykol und deren Isomere zum Einsatz, die durch folgende Strukturformeln dargestellt werden können.

Diole: HO-R¹⁶-OH,
wobei R¹⁶ vorzugsweise (CH₂)₂, (CH₂)₃, (CH₂)₄, (CH₂)₅, (CH₂)₆ -CH₂-CH(OH)-CH₂- und/oder -CH₂-CH₂-O-CH₂-CH₂- bedeutet.

Besonders bevorzugt kommen 1,4-Butandiol und Glycerin zur Verwendung.

Die Diolkomponente wird vorzugsweise in einer Menge von 1 Gew.% bis 20 Gew.%, bevorzugt von 1 Gew.% bis 10 Gew.%, besonders bevorzugt von 1 Gew.% bis 7 Gew.% bezogen auf das Gesamtgewicht der Zusammensetzung eingesetzt.

Besonders bevorzugt ist bei dem erfindungsgemäßen Polyurethanelastomer zumindest ein Triol auf der Basis von Polyether- und/oder Polyesterpolyolen oder Glycerin anwesend.

Als Katalysatoren kommen vorzugsweise sämtliche Sn, Zn und oder Aminkatalysatoren laut nachstehender allgemeiner Strukturformel in Frage.

Als Katalysatoren sind bevorzugt: 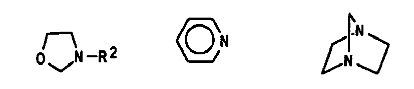 R¹⁷-(N-R¹⁷) -R¹⁷, Metallamine
(R¹⁷)₂-N-CH₂-CH₂-N-(R¹⁷)₂,
wobei R¹⁷ vorzugsweise H, CH₃, -(CH₂)ₙ-CH₃, Cyclohexan und R² vorzugsweise H, CH₃, oder aliphatischer Kohlenwasserstoffrest mit 2 bis 4 Kohlenstoffatomen, wie vorzugsweise Ethyl-, n-Propyl-, iso-Propyl-, 1-n-Butyl-, 2-n-Butyl-, iso-Butyl-, tert.-Butyl- bedeutet.
Besonders bevorzugt sind die Katalysatoren Triethylamin, Zinnamin und/oder Diazobicyclooctan.

Der Katalysator wird vorzugsweise in einer Menge von 0,05 Gew.% bis 7 Gew.%, bevorzugt von 0,05 Gew.% bis 4 Gew.%, besonders bevorzugt von 0,1 Gew.% bis 2 Gew.% bezogen auf das Gesamtgewicht der Zusammensetzung eingesetzt.

Weiter können vorzugsweise noch Zusatzmittel verwendet werden, um diese tieftemperaturbeständigen Polyurethanelastomere herzustellen. Unter anderem können noch vorzugsweise Farbstoffe, Zellstabilisatoren, Molekularsiebe, Treibmittel, etc. zugegeben werden. Diese werden vorzugsweise in einer Menge von 1 Gew.% bis 10 Gew.%, bevorzugt von 1 Gew.% bis 7 Gew.%, besonders bevorzugt von 2 Gew.% bis 5 Gew.% bezogen auf das Gesamtgewicht der Zusammensetzung eingesetzt.
Als Treibmittel kommt bevorzugt Wasser bzw. HFCKW zum Einsatz. Besonders bevorzugt wird Wasser bei der Herstellung der tieftemperaturbeständigen Polyurethanelastomere verwendet. Das Treibmittel wird vorzugsweise in einer Menge von 0,1 Gew.% bis 10 Gew.%, bevorzugt von 0,1 Gew.% bis 5 Gew.%, besonders bevorzugt von 0,5 Gew.% bis 3 Gew.% bezogen auf das Gesamtgewicht der Zusammensetzung eingesetzt.

Ein weiterer Gegenstand der Erfindung ist ein Verfahren zur Herstellung von Polyurethanelastomeren, dadurch gekennzeichnet, dass zumindest eine Isocyanatkomponente mit, zumindest einem Polysiloxan als Polyolkomponente, zumindest einem Katalysator und zumindest einem Kettenverlängerer miteinander reagieren gelassen werden.

### Beschreibung des Herstellungsverfahrens:

Die erfindungsgemäßen Polyurethanelastomere werden durch ein Polyadditionsverfahren auf handelsüblichen Hochdruck- oder Niederdruckpolyurethananlagen in einem Temperaturbereich von 15°C - 70°C, bevorzugt bei 20 °C - 30 °C und einem Verarbeitungsdruck von 1 bar - 40 bar, bevorzugt bei 1 bar - 5 bar hergestellt.
Dabei werden 10 - 80 Gew.%, bevorzugt 40 - 70 Gew.% der oben erwähnten Polyole, bevorzugt Polysiloxane, 1 - 20 Gew.%, bevorzugt 1 - 7 Gew.% der genannten Kettenverlängerer, vorzugsweise Glycerin, Farben, 1 - 10 Gew.%, bevorzugt 2 - 5 Gew.% Treibmittel, bevorzugt Wasser, Zusatzstoffe und 0,05 - 7 Gew.%, bevorzugt 0,1 - 2 Gew.% von den Katalysatoren in einem Mischtank vermengt. 5 - 50 Gew.%, bevorzugt 20 - 35 Gew.% des in einem weiteren Vorratstank aufbewahrten Isocyanates, bevorzugt Quasipräpolymere von Diisocyanatodiphenylmethan, und diese Polyolmischung werden dann über ein Pumpensystem zum Mischkopf der Polyurethananlage gepumpt, dort gemischt, bevorzugt mit einem Lamellenrührer und dann je nach Produkt auf ein Band gegossen oder in eine Form gefüllt.

Ein weiterer Gegenstand ist ein Formkörper der folgende Werkstoffeigenschaften aufweist:
Verlustfaktor (DMA): 0,1 - 0,5
Einsatztemperatur (DMA): -120 - +300 [°C]
Glasübergang (DSC): -120 [°C]
Dichte : 100- 1100 [kg/m³]
Reissfestigkeit : 0,2 - 0,5 [N/mm²]
Reissdehnung: 50 - 200 [%]
Druckverformungsrest : 1,5- 40 [%]

Verlustfaktor nach DIN 53513
Einsatztemperatur nach DIN 53545
Glasübergang nach DIN 53765 bzw. DIN 53365
Reissfestigkeit nach DIN 53455-6-4
Reissdehnung nach DIN 53455-6-4
Zugversuch nach DIN 53455
Druckverformungsrest nach DIN 53572

Diese speziellen temperaturbeständigen Polyurethanelastomere haben einen breiten Anwendungsbereich und kommen vor allem im Flugzeugbau, in der Weltraumforschung, im Automobilbereich, auf dem Bau, in der Industrie, und bei der Bahn, zum Einsatz, da in diesen Bereichen eine hohe Anforderung an temperaturbeständige Materialien gestellt wird.

Die Vorteile dieser temperaturbeständigen Polyurethanelastomere sind unter anderen :
Gleichbleibende Elastizität bei sehr tiefen Temperaturen (-120°C). Beständigkeit bei sehr hohen Temperaturen (+300°C). Konstante Elastizität bei sehr starken Temperaturschwankungen (-120 bis +300 °C).

### Beispiel 1

100 g carbinolfunktionelles Polydimethylsiloxan (MG 4000) werden mit 2 g Glycerin, 3 g 1,4-Butandiol, 0,25 g Wasser und 0,22 g Katalysator (Diazabicyclooctan) 25 sec. mit einem Handrührer in einem Becher vermischt. Danach werden 40 g Diisocyanatodiphenylmethan (Quasipräpolymer) dazugemischt, das ganze nochmals 20sec. gerührt und danach in eine beheizte Form gegossen. (Glasübergang: -120°C)

### Beispiel 2

Dieses Beispiel dient als Vergleich, bei dem keine Polysiloxane eingesetzt wurden. Der Glasübergang ist dementsprechend höher und das Material kann nicht als sehr tieftemperaturbeständig bezeichnet werden.
100 g Polypropylenoxidetherdiol (MG 4000) werden mit 2 g Glycerin, 3 g 1,4- Butandiol, 0,25 g Wasser als Treibmittel und mit 0,22 g Katalysator (Diazabicyclooctan) wie in Beispiel 1 vermischt und mit 38g Diisocyanatodiphenylmethan (Quasipräpolymer) wie oben umgesetzt. (Glasübergang: -50°C)

## Patentansprüche

1. Polyurethanelastomer herstellbar auf der Basis von zumindest einer Isocyanatkomponente, zumindest einem Polysiloxan als Polyolkomponente, zumindest einem Katalysator und zumindest einem Triol als Kettenverlängerer, mit der Maßgabe, dass kein Trimethylolpropan enthalten ist.

2. Polyurethanelastomer nach Anspruch 1, **dadurch gekennzeichnet, dass** es sich bei dem Polysiloxan um
HO-[CH₂CH₂O]ₙ₈(CH₂)₃SiR¹⁸₂O[R¹⁸₂SiO]ₙ₉SiR¹⁸₂(CH₂)₃[OCH₂CH₂]ₙ₈-OH
oder um 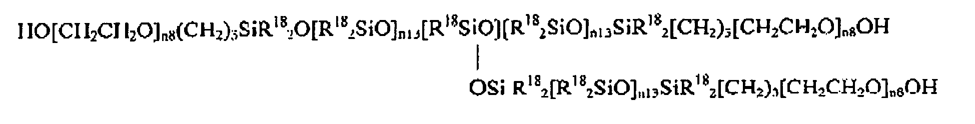 oder beliebige Mischungen solcher Komponenten handelt,
wobei R¹⁸ gleiche oder verschiedene Kohlenstoffwasserstoffreste mit 1 bis 18 Kohlenstoffatom(en) bedeutet und
n8 eine ganze Zahl von 0 bis 30,
n9 eine ganze Zahl von 0 bis 100,
n13 eine ganze Zahl von 0 bis 40 ist.

3. Polyurethanelastomer nach Anspruch 1, **dadurch gekennzeichnet, dass** es sich bei dem Polysiloxane um ein Polysiloxan folgender Strukturformel handelt:
HO-[CH₂CH₂O]ₙ₈(CH₂)₃SiR¹⁸₂O[R¹⁸₂SiO]ₙ₉SiR¹⁸₂(CH₂)₃[OCH₂CH₂]ₙ₈-OH,
wobei R¹⁸ gleiche oder verschiedene Kohlenstoffwasserstoffreste mit 1 bis 18 Kohlenstoffatom(en) bedeutet und
n8 eine ganze Zahl von 0 bis 30,
n9 eine ganze Zahl von 0 bis 100 ist.

4. Polyurethanelastomer nach Anspruch 1, **dadurch gekennzeichnet, dass** es sich bei dem Polysiloxan um
NH₂-[CH₂CH₂NH]ₙ₁₀(CH₂)₃SiR¹⁸₂O[R¹⁸₂SiO]ₙ₉SiR¹⁸₂(CH₂)₃[NHCH₂CH₂]ₙ₁₀-NH₂
oder um 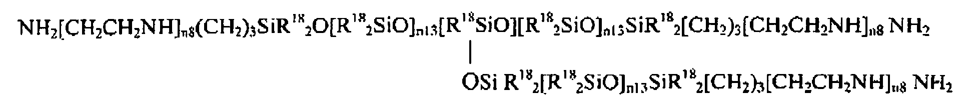 oder um beliebige Mischungen dieser Komponenten handelt,
wobei R¹⁸ gleiche oder verschiedene Kohlenstoffwasserstoffreste mit 1 bis 18 Kohlenstoffatom(en) bedeutet und
n8 eine ganze Zahl von 0 bis 30,
n9 eine ganze Zahl von 0 bis 100,
n10 eine ganze Zahl von 0 bis 20,
n13 eine ganze Zahl von 0 bis 40 ist.

5. Polyurethanelastomer nach Anspruch 1, **dadurch gekennzeichnet, dass** es sich bei dem Polysiloxan um beliebige Mischung der Polysiloxane nach einem oder mehreren der Ansprüche 2 bis 4 handelt.

6. Polyurethanelastomer nach Anspruch 1, **dadurch gekennzeichnet, dass** es sich bei der Polyolkomponente um Polysiloxane nach einem oder mehreren der Ansprüche 2 bis 5 und Polyetherpolyole der folgenden Strukturformeln handelt:
HO-R⁷-H
wobei R⁷ (CH₂CHR²O)ₙ₅ und
R² H, CH₃ oder aliphatischer
Kohlenwasserstoffrest mit 2 bis 4 Kohlenstoffatomen ist und n5 eine ganze Zahl von 1 bis 5000 ist.

7. Polyurethanelastomer nach einem der Ansprüche 1 bis 6, **dadurch gekennzeichnet, dass** es sich bei der Isoocyantkomponente um Diisocyanatdiphenylmethanverbindungen der folgenden Formel handelt: OCN -R⁵- NCO
wobei R⁵ , 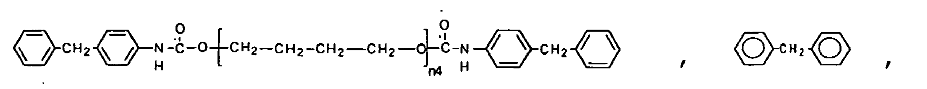 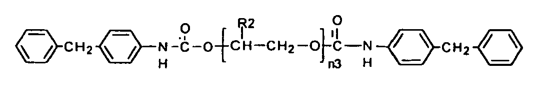 R² vorzugsweise H, CH₃ oder aliphatischer
Kohlenwasserstoffrest mit 2 bis 4 Kohlenstoffatomen bedeutet und
n3 eine ganze Zahl von 1 bis 500
n4 eine ganze Zahl von 1 bis 10 ist.

8. Polyurethanelastomer nach Anspruch 7, **dadurch gekennzeichnet, dass** es sich bei der Isoocyantkomponente um folgende Strukturformeln handelt:
OCN - R⁶ -NCO und 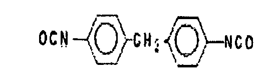 wobei R⁶ 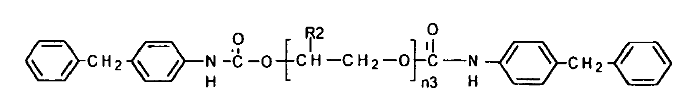 bedeutet,
wobei R² vorzugsweise H, CH₃ oder aliphatischer Kohlenwasserstoffrest mit 2 bis 4 Kohlenstoffatomen und n3 eine ganze Zahl von 1 bis 500 ist.

9. Polyurethanelastomer nach einem der Ansprüche 1 bis 8, **dadurch gekennzeichnet, dass** es sich bei den Kettenverlängerern um Butandiol, Glykol, Glycerin oder Diethylenglykol handelt.

10. Polyurethanelastomer nach einem der Ansprüche 1 bis 9, **dadurch gekennzeichnet, dass** es sich bei dem Katalysator, um Triethylamin, Diazobicyclooctan und/oder Zinnamin handelt.

11. Verfahren zur Herstellung von Polyurethanelastomeren, **dadurch gekennzeichnet, dass** zumindest eine Isocyanatkomponente, zumindest ein Polysiloxan als Polyolkomponente, zumindest ein Katalysator und zumindest ein Kettenverlängerer mit einander reagieren gelassen werden.

12. Formkörper, **dadurch gekennzeichnet, dass** er folgende Werkstoffeigenschaften aufweist:
Verlustfaktor (DMA): 0,1 - 0,5
Einsatztemperatur (DMA): -120 - +300 [°C]
Glasübergang (DSC): -120 [°C]
Dichte : 100- 1100 [kg/m³]
Reissfestigkeit : 0,2 - 0,5 [N/mm²]
Reissdehnung: 50 - 200 [%]
Druckverformungsrest : 1,5- 40 [%]

## Claims

1. Polyurethane elastomer which can be prepared on the basis of at least one isocyanate component, at least one polysiloxane as a polyol component, at least one catalyst and at least one triol as a chain extender, with the proviso that no trimethylolpropane is present.

2. Polyurethane elastomer according to Claim 1, **characterized in that** the polysiloxane is
HO-[CH₂CH₂O]ₙ₈(CH₂)₃SiR¹⁸₂(CH₂)[R¹⁸₂SiO]ₙ₉SiR¹⁸₂(CH₂)₃[OCH₂CH₂]ₙ₈-OH
or 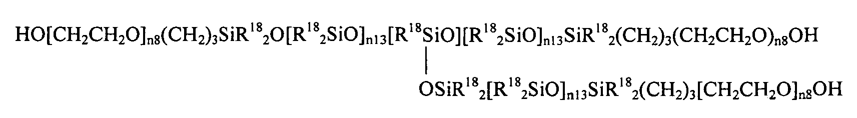 or any desired mixtures of such components,
R¹⁸ denoting identical or different hydrocarbon radicals having 1 to 18 carbon atom(s) and
n8 being an integer from 0 to 30,
n9 being an integer from 0 to 100,
n13 being an integer from 0 to 40.

3. Polyurethane elastomer according to Claim 1,
**characterized in that** the polysiloxanes are a polysiloxane of the following structural formula:
HO-[CH₂CH₂O]ₙ₈(CH₂)₃SiR¹⁸₂O[R¹⁸₂SiO]ₙ₉SiR¹⁸₂(CH₂)₃[OCH₂CH₂]ₙ₈-OH,
R¹⁸ denoting identical or different hydrocarbon radicals having 1 to 18 carbon atom(s) and
n8 being an integer from 0 to 30,
n9 being an integer from 0 to 100.

4. Polyurethane elastomer according to Claim 1, **characterized in that** the polysiloxane is
NH₂-[CH₂CH₂NH]ₙ₁₀(CH₂)₃SiR¹⁸₂O[R¹⁸₂SiO]ₙ₉SiR¹⁸₂(CH₂)₃[NHCH₂CH₂]ₙ₁₀-NH₂
or 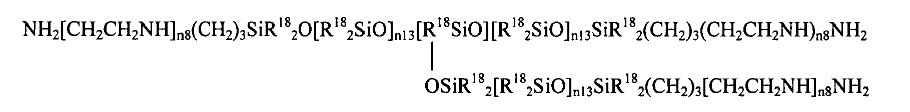 or any desired mixtures of these components,
R¹⁸ denoting identical or different hydrocarbon radicals having 1 to 18 carbon atom(s) and
n8 being an integer from 0 to 30,
n9 being an integer from 0 to 100,
n10 being an integer from 0 to 20,
n13 being an integer from 0 to 40.

5. Polyurethane elastomer according to Claim 1, **characterized in that** the polysiloxane is any desired mixture of the polysiloxanes according to one or more of Claims 2 to 4.

6. Polyurethane elastomer according to Claim 1, **characterized in that** the polyol component comprises polysiloxanes according to one or more of Claims 2 to 5 and polyetherpolyols of the following structural formulae:
HO-R⁷-H
R⁷ being (CH₂CHR²O)ₙ₅ and
R² being H, CH₃ or an aliphatic hydrocarbon radical having 2 to 4 carbon atoms and
n5 being an integer from 1 to 5000.

7. Polyurethane elastomer according to any of Claims 1 to 6, **characterized in that** the isocyanate component comprises diisocyanatodiphenylmethane compounds of the following formula: OCN-R⁵-NCO, R⁵ denoting 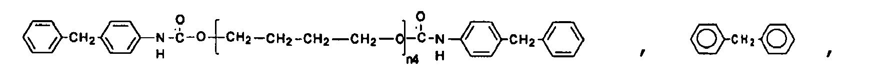 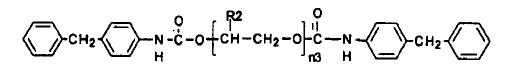 R² preferably denoting H, CH₃ or an aliphatic hydrocarbon radical having 2 to 4 carbon atoms and
n3 being an integer from 1 to 500
n4 being an integer from 1 to 10.

8. Polyurethane elastomer according to Claim 7, **characterized in that** the isocyanate component has the following structural formulae:
OCN-R⁶-NCO and 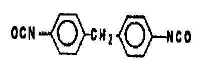 R⁶ denoting 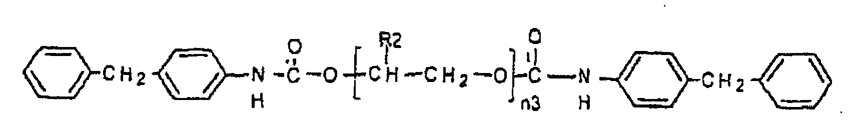 R² preferably being H, CH₃ or an aliphatic hydrocarbon radical having 2 to 4 carbon atoms and n3 being an integer from 1 to 500.

9. Polyurethane elastomer according to any of Claims 1 to 8, **characterized in that** the chain extenders are butanediol, glycol, glycerol or diethylene glycol.

10. Polyurethane elastomer according to any of Claims 1 to 9, **characterized in that** the catalyst is triethylamine, diazobicyclooctane and/or tin amine.

11. Process for the preparation of polyurethane elastomers, **characterized in that** at least one isocyanate component, at least one polysiloxane as a polyol component, at least one catalyst and at least one chain extender are allowed to react with one another.

12. Moulding, **characterized in that** it has the following material properties:
Loss factor (DMA): 0.1-0.5
Temperature of use (DMA) : -120 - +300 [°C]
Glass transition temperature (DSC): -120 [°C]
Density: 100-1100 [kg/m³]
Tensile strength: 0.2-0.5 [N/mm²]
Elongation at break: 50-200 [%]
Compression set: 1.5-40 [%]

## Revendications

1. Elastomère de polyuréthane pouvant être préparé à base d'au moins un composant isocyanate, au moins un polysiloxane comme composant polyol, au moins un catalyseur et au moins un triol comme agent d'allongement de chaînes, à condition qu'il ne contienne pas de triméthylolpropane.

2. Elastomère de polyuréthane selon la revendication 1, **caractérisé en ce qu'**il s'agit pour le polysiloxane de
HO-[CH₂CH₂O]ₙ₈(CH₂)₃SiR¹⁸₂O[R¹⁸₂SiO]ₙ₉SiR¹⁸₂(CH₂)₃[OCH₂CH₂]ₙ₈-OH
ou de 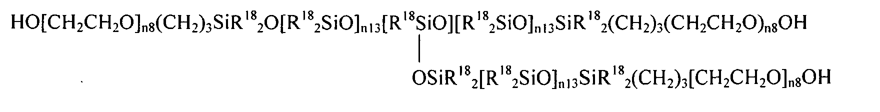 ou de mélanges quelconques de tels composants,
dans lequel les R¹⁸ représentent des radicaux hydrocarbonés identiques ou différents avec 1 à 18 atomes de carbone et
n8 est un nombre entier de 0 à 30,
n9 est un nombre entier de 0 à 100,
n13 est un nombre entier de 0 à 40.

3. Elastomère de polyuréthane selon la revendication 1, **caractérisé en ce qu'**il s'agit pour le polysiloxane d'un polysiloxane de formule de structure suivante :
HO-[CH₂CH₂O]ₙ₈(CH₂)₃SiR¹⁸₂O[R¹⁸₂SiO]ₙ₉SiR¹⁸₂(CH₂)₃[OCH₂CH₂]ₙ₈-OH,
dans lequel les R¹⁸ représentent des radicaux hydrocarbonés identiques ou différents avec 1 à
18 atomes de carbone et
n8 est un nombre entier de 0 à 30,
n9 est un nombre entier de 0 à 100.

4. Elastomère de polyuréthane selon la revendication 1, **caractérisé en ce qu'**il s'agit pour le polysiloxane de :
NH₂-[CH₂CH₂NH]ₙ₁₀(CH₂)₃SiR¹⁸₂O[R¹⁸₂SiO]ₙ₉SiR¹⁸₂(CH₂)₃[NHCH₂CH₂]ₙ₁₀-NH₂,
ou de 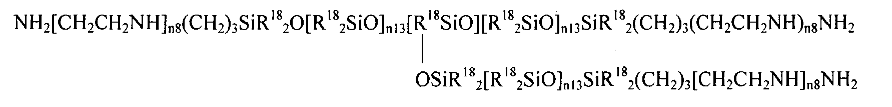 ou de mélanges quelconques de ces composants,
dans lequel les R¹⁸ représentent des radicaux hydrocarbonés identiques ou différents avec 1 à 18 atomes de carbone et
n8 est un nombre entier de 0 à 30,
n9 est un nombre entier de 0 à 100,
n10 est un nombre entier de 0 à 20,
n13 est un nombre entier de 0 à 40.

5. Elastomère de polyuréthane selon la revendication 1, **caractérisé en ce qu'**il s'agit pour le polysiloxane d'un mélange quelconque des polysiloxanes selon une ou plusieurs des revendications 2 à 4.

6. Elastomère de polyuréthane selon la revendication 1, **caractérisé en ce qu'**il s'agit pour le composant polyol de polysiloxanes selon une ou plusieurs des revendications 2 à 5 et de polyéther-polyols de formule de structure suivante :
HO-R⁷-H
dans laquelle
R⁷ représente (CH₂CHR²O)ₙ₅ et
R² est H, CH₃ ou un radical hydrocarboné aliphatique avec 2 à 4 atomes de carbone et
n5 est un nombre entier de 1 à 5000.

7. Elastomère de polyuréthane selon l'une quelconque des revendications 1 à 6, **caractérisé en ce qu'**il s'agit pour le composant isocyanate de composés diisocyanato-diphénylméthane de formule suivante : OCN-R⁵-NCO
dans laquelle R⁵ représente 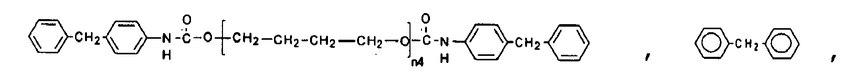 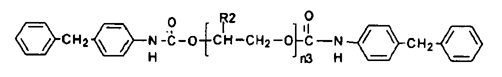 R² représente de préférence H, CH₃ ou un radical hydrocarboné aliphatique avec 2 à 4 atomes de carbone et
n3 est un nombre entier de 1 à 500
n4 est un nombre entier de 1 à 10.

8. Elastomère de polyuréthane selon la revendication 7, **caractérisé en ce qu'**il s'agit pour le composant isocyanate de formules de structures suivantes :
OCN-R⁶-NCO et 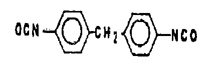 R⁶ représentant 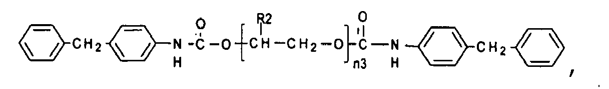 dans laquelle R² représente de préférence H, CH₃ ou un radical hydrocarboné aliphatique avec 2 à 4 atomes de carbone et
n3 est un nombre entier de 1 à 500.

9. Elastomère de polyuréthane selon l'une quelconque des revendications 1 à 8, **caractérisé en ce qu'**il s'agit pour les agents d'allongement de chaînes de butanediol, glycol, glycérol ou diéthylèneglycol.

10. Elastomère de polyuréthane selon l'une quelconque des revendications 1 à 9, **caractérisé en ce qu'**il s'agit pour le catalyseur de triéthylamine, diazobicyclo-octane et/ou d'étain-amine.

11. Procédé de préparation d'élastomères de polyuréthane, **caractérisé en ce que** l'on fait réagir entre eux au moins un composant isocyanate, au moins un polysiloxane comme composant polyol, au moins un catalyseur et au moins un agent d'allongement de chaînes.

12. Corps moulé, **caractérisé en ce qu'**il présente les caractéristiques de matériau suivantes :
Facteur de perte (DMA) : 0,1 - 0,5
Température d'utilisation (DMA) : -120 - +300 [°C]
Température de transition vitreuse (DSC) : -120 [°C]
Masse volumique : 100 - 1100 [kg/m³]
Résistance à la traction : 0,2 - 0,5 [N/mm²]
Allongement à la rupture : 50 - 200 [%]
Déformation rémanente à la compression : 1,5 - 40 [%].
